# EUROPEAN PATENT APPLICATION

(11) **EP 0 630 063 A1**
(43) Date of publication of application: **21.12.1994**
(21) Application number: 94201553.8
(22) Date of filing: 01.06.1994
(51) Int. Cl.: H01M 4/14, H01M 4/68, H01M 10/18

(54) **Bipolar battery electrode and method**

(30) Priority: 21.06.1993 US 79030
(71) Applicant: GENERAL MOTORS CORPORATION, Detroit Michigan 48202 (US)
(72) Inventor: Meadows, Clarence Alfred, Muncie, Indiana 47302 (US); Adams, Robert Eugene, Selma, Indiana 47383 (US); Bish, James Robert, Anderson, Indiana 46011 (US)
(74) Representative: Denton, Michael John

(57) **Abstract**

A bi-polar electrode for a Pb-acid battery comprises a lead septum plate (2) and a porous coating (16) on at least one face (18) of the septum plate (2) for anchoring at least a positive active material paste (24) to the septum plate (2). The porous coating (16) comprises multiple layers of lead particles (20) fused together and to the septum face (18) so as to define a plurality of interconnected, interstitial pores (22) therebetween. The particles (20) are fused droplets of lead arc-sprayed into the surface of the septum plate (2). A particular bi-polar battery construction useful with the bi-polar electrode is also disclosed.

## Description

This invention relates to a bipolar lead-acid storage battery, and more particularly to an electrode therefor as specified in the preamble of claim 1, and a method of making same.

Bipolar batteries employ either one of two types of bipolar electrodes. The first, termed a "face-to-face" type of bipolar electrode, utilises an electrolyte-impervious, substantially planar, conductive septum having a first polarity active material on one face thereof and an opposite polarity active material on the opposite face thereof. Bipolar electrodes are typically held in frames of non-conductive material which isolate one cell from the next and which are stacked together (i.e., to form the battery) such that opposite polarity faces of adjacent electrodes oppose each other across an electrolyte-filled gap containing an electrolyte-permeable, dendrite-suppressing separator (eg, microporous polyethylene, glass mat or microporous PVC). One such battery is exemplified by US-A-3,728,158 (Poe et al).

It is known for the electrolyte-impervious, conductive septum that separates the opposite polarity active materials, and one cell from the next, to comprise (1) a thin plate of lead or an alloy thereof (hereinafter referred to simply as lead), (2) an electrically-conductive polymer, or (3) a non-conductive polymer having a plurality of rivet-like conductors embedded therein for electrically communicating one face of the septum to the other. The electrically-conductive polymers (eg, metal-filled synthetic plastics materials) tend to have poorer electrical conductivity than the lead plates, and the embedded conductor-type septums are costly to produce and susceptible to leakage of electrolyte between cells due to poor sealing around the rivets. Accordingly, the use of solid lead plates is preferred for long-lived, high-power bipolar batteries. One of the disadvantages of the use of lead plate septums, however, is poor adhesion of the active material (e.g., paste), and particularly the positive active material paste, to the lead plate. This problem becomes aggravated with charge/discharge recycling of the battery and results in a shortening of the useful life of the battery.

A bi-polar electrode for a lead-acid storage battery according to the present invention is characterised by the features specified in the characterising portion of claim 1.

It is an object of the present invention to provide a unique bipolar battery electrode, and related battery, having a lead plate septum wherein at least the face of the septum that engages the positive active material is coated with a fused layer of lead particles for promoting improved adhesion of the positive active material paste to the septum. It is another object of the present invention to provide a process for improving the adhesion of at least the positive active material paste to a lead septum of a lead-acid, bipolar electrode. These and other objects and advantages of the present invention will become more readily apparent from the detailed description thereof which follows.

In accordance with the electrode aspect of the present invention, there is provided a bipolar electrode for a lead-acid storage battery comprising an electrolyte-impervious lead plate septum having an adherent, porous coating on at least one face thereof for securely anchoring a lead-containing active material to said face. In a preferred embodiment, the adherent, porous coating is applied to both faces of the lead plate. The coating comprises multiple layers of lead particles fused to each other and to the face of the septum so as to define a plurality of interconnecting, interstitial pores therebetween. The coating has a thickness varying from about 0.0508 mm (two (2) thousandths of an inch) to about 0.508 mm (twenty (20) thousandths of an inch), comprises lead particles varying from about 10 micrometres to about 200 micrometres in diameter and has a porosity of about fifty percent (50%) by volume. Coatings having an average particle and pore size of about thirty (30) micrometres to about fifty (50) micrometres are particularly effective. A lead-containing active material is pressed into the pores and overlays (ie, is pasted over) the coating by about 0.254 mm (10 thousandths of an inch) to about 1.778 mm (70 thousandths of an inch). The lead-containing active material need only impregnate the outermost layers of the coating to anchor the paste to the face of the septum. Any unfilled pores beneath the paste-filled surface pores will serve as a useful reservoir for electrolyte. In those situations where the coating is applied to only one face of the lead septum, the lead-containing active material impregnating the coating will be positive polarity active material. The lead-containing active material referred to herein is the active material paste commonly used in lead-acid storage batteries which comprises a PbO paste (ie, in the unformed state), or, in the formed state, will comprise a PbO₂ positive active material or a Pb negative active material paste along with the other ingredients commonly used in such pastes. Electrodes made in accordance with the present invention are mounted in non-conductive frames and are stacked together face-to-face and with monopolar electrodes at the ends of the stack to form a complete bipolar battery. The monopolar electrodes may comprise conventional battery plates (ie, pasted grids) or, preferably, lead septum plates according to the present invention, which are pasted only on one face.

In accordance with the method aspect of the present invention, for forming an electrode according to the present invention, a plurality of molten lead droplets are sprayed onto the face(s) of the lead septum. The droplets solidify as particles fused to the face(s) of the septum, and to one another, so as to provide a porous, multi-layered coating defining a plurality of interconnecting, interstitial pores between the particles. Thereafter, lead-containing active material is pressed into the pores to an extent sufficient to anchor the active material to the coating. Spraying the droplets of molten lead onto the lead septum breaks-up any oxide film that might exist on the septum surface and promotes fusion of the droplets to the face of the septum.

In accordance with a preferred embodiment of the process of the invention, the lead droplets are arc-sprayed onto the lead septum. That is to say, an electric arc is struck between a lead electrode and a counter-electrode (which may also be formed from lead) whilst a stream of inert gas is flowed through the arc at a rate sufficient to disperse the molten lead into droplets and propel them against the face of the lead septum. The inert gas serves to blanket the molten lead particles and the lead septum and to prevent oxidation thereof whilst at the elevated temperatures involved. Conventional arc-spraying guns such as Miller Thermal Model No. JK40 operated with argon pressures between about 206.84 kPa (30 psig) and about 517.11 kPa (75 psig), current between about 40 amperes and about 120 amperes and voltages between about 18 volts and about 32 volts are effective to produce the desired coating. In this type of arc-spraying gun, two lead wire electrodes continuously fed toward each other within the gun create the arc. Lead wires comprising 0.45 Sn, 0.05 Ag and varying in size between about 1.588 mm (1/16 in) and about 3.18 mm (1/8 in) diameter have been used successfully. Other techniques for spraying (eg, flame-spraying) the particles, or otherwise forming the particle coatings, may also be employed so long as the finished coating adheres to the septum and has the open cell porosity discussed above. The coating thus produced, unlike sandblasting or other surface-roughening techniques, provides a significant number of undercut regions (ie, pockets) which receive and firmly anchor the lead-containing active material against separation from the septum.

In accordance with the battery aspect of the present invention, there is provided a bipolar battery comprising a stack of bipolar electrodes, of the type discussed above, each including a non-conductive frame engaging the periphery thereof. A non-conductive lattice engages the frame and overlays the faces of the septum so as to define a plurality of pockets thereover for receiving and retaining the lead-containing active material. The framed electrodes are stacked together face-to-face with opposite polarity active material on adjacent electrodes opposing one another across an electrolyte retention region therebetween. The electrolyte retention region is defined by appropriate spacer means which also serves to space the bipolar electrodes apart. The spacer means may include a discrete frame member sandwiched between adjacent bipolar electrodes or, alternatively, flanges moulded directly onto the frames of the electrodes. The frames are stacked together and may be sealed one to the other to form the outer housing/casing for the battery, or, preferably, encased in a separate housing/casing. Preferably, the stack of frames is placed in a mould and an external housing/casing moulded thereabout. Bipolar battery assemblies particularly useful with the electrodes of the present invention are described in more detail in our co-pending patent application no corresponding to United States patent application Serial No 08/079029, filed concurrently herewith.

The invention will be better understood when considered in the light of the following detailed description of a specific, preferred embodiment thereof which is given hereafter in conjunction with the accompanying drawings, in which:
Figure 1 is a front, elevational view of a bipolar electrode in accordance with the present invention;
Figure 2 is a sectioned, side elevational view of the bipolar electrode taken in the direction 2-2 of Figure 1;
Figures 3a, 3b and 3c are views like Figure 2 of alternative embodiments to the frame and lattice shown in Figure 2;
Figure 4 is a magnified view of the zone 4 of Figure 2;
Figure 5 is a view like that of Figure 2, but having active material pasted on both sides of the electrode;
Figure 6 is a view like Figure 5, but with active material pasted on only one face of the electrode to form a monopolar electrode;
Figure 7 is a partially sectioned, front, elevational view of an inter-electrode spacing frame;
Figure 8 is a sectional view of the spacing frame taken in the direction 8-8 of Figure 7;
Figure 9 is a front elevational view of an end wall of a bipolar battery;
Figure 10 is a sectional view of the end wall taken in the direction 10-10 of Figure 9;
Figure 11 is a sectional view of the end wall taken in the direction 11-11 of Figure 9;
Figure 12 is an exploded view of a bipolar battery stack;
Figure 13 is a perspective view of a bipolar battery in a separate housing; and
Figure 14 is a sectioned, side view of the bipolar battery taken in the direction 14-14 of Figure 13.

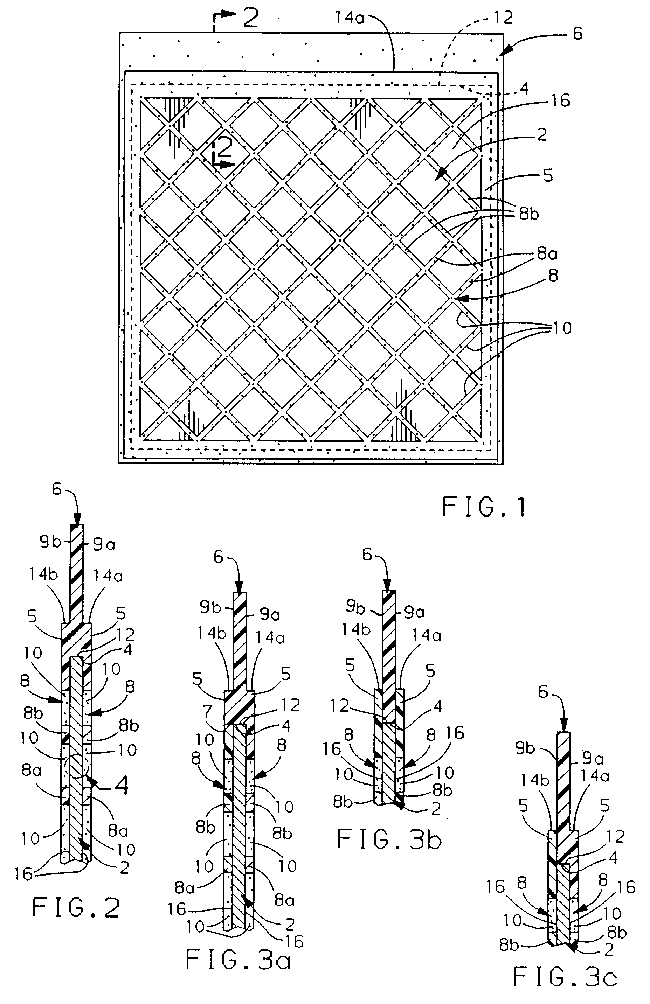

Figures 1-5 depict a bipolar electrode comprising a lead septum plate 2 encompassed by a non-conductive plastics frame 6 having an inner rim 4 engaging the periphery of the plate 2. The frame 6 is preferably insert-moulded about the plate by positioning the plate in a mould and moulding the frame thereabout. Non-conductive (eg, polyolefin) lattices 8 comprising a plurality of criss-crossing lattice wires 8a and 8b define a plurality of pockets 10 overlaying the faces on opposite sides of the septum plate 2. As shown in Figure 2, the lattices 8 may be moulded in one piece with the frame 6. Alternatively, and as shown in Figures 3a, 3b and 3c, one or both of the lattices 8 may be moulded separately from the frame 6 and subsequently made integral therewith by bonding (eg, heat-sealing, ultrasonically bonding, or adhesively bonding thereto). As shown in Figure 2, borders 5 of the lattices 8 are moulded together with the frame 6 around an edge 12 of the plate 2. As shown in Figure 3a the edge 12 of the plate 2 is co-extensive with perimeter(s) 7 of border(s) 5 of the lattice(s) 8 and the frame 6 is then moulded thereabout so as to bond to the perimeters 7 of the lattices 8. Figures 3b and 3c show other variations of the junction between the lattice borders 5 and the frame 6. Shoulder portions 14a and 14b are formed at the junction between the borders 5 of the lattices 8 and the frame 6, and extend completely around the lattices 8. Like mesas, the lattices 8 stand in relief above faces 9a and 9b of the frame 6 and are sized to nest in complementary-shaped recesses formed in a spacer frame (to be discussed hereinafter). Alternatively the discrete spacer frame may be eliminated and the electrode frame 6 widened in the direction normal to the septum plate 2 to provide the electrolyte region and to space the bipolar electrodes apart from each other.

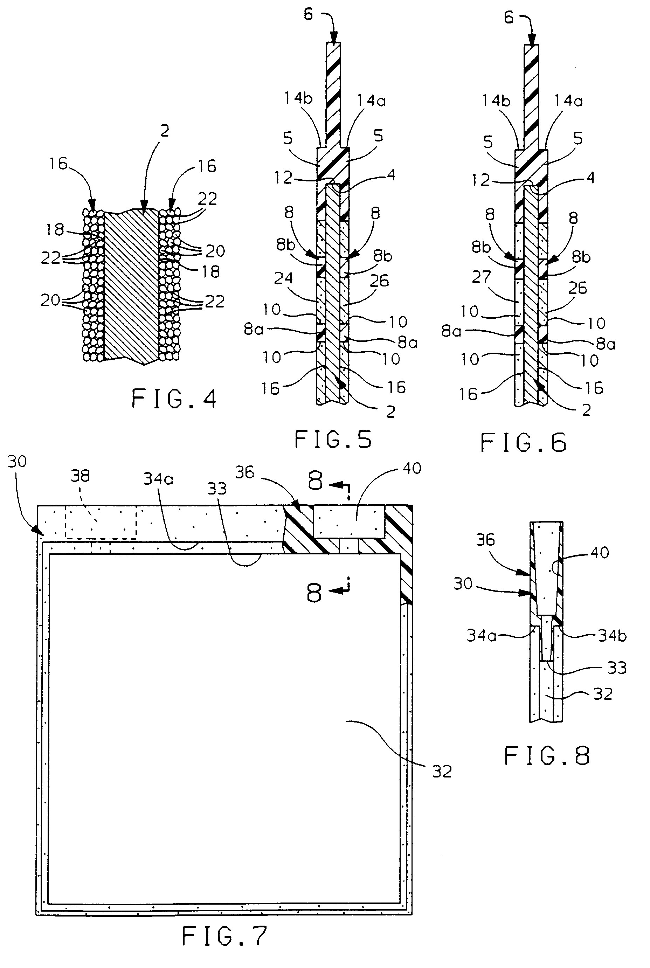

In accordance with the present invention, a porous coating 16 is provided on at least one face 18 of the lead septum plate 2, which coating comprises multiple layers of lead particles 20 fused to each other, and to the face 18, so as to define a plurality of interconnecting interstitial pores 22 therebetween (see Figure 4). The coating is formed by spraying a plurality of molten lead droplets onto the face 18 of the plate 2. The droplets will preferably be arc-sprayed whereby an arc is struck between a lead electrode and a counter-electrode (eg, also comprising Pb), whilst an inert gas is flowed through the arc at a rate sufficient to form droplets of the molten lead in the arc and propel the droplets against the face 18, where the droplets fuse to the face 18 and to each other in such a manner as to provide a pebble-like coating of Pb particles bonded to each other and defining the plurality of interstitial voids 22. The inert gas will preferably comprise argon, or a mixture of argon and nitrogen, and serves to prevent oxidation of the droplets and the face 18 at the high temperatures involved. The septum plate 2 will be about 0.381 or more millimetres (0.015 or more inches) thick with the porous coating being about 0.0508 to about 0.508 mms thick (about 0.002 to about 0.02 inches thick) and comprising particles varying in size from about 10 micrometres to about 200 micrometres in diameter. Preferably, the average particle size will be about 50 micrometres. Impinging the hot lead droplets against the face 18 breaks up any oxides that might be formed on the surface thereof and promotes bonding of the droplets to the face 18.

The septum plate 2 is next mounted in the plastics frame 6. For the embodiment shown in Figure 2, the septum plate 2 is placed in an appropriate mould and a thermoplastic material (eg, polypropylene, polyethylene) is injected thereabout to form a structure comprising the frame 6 and lattice 8 in a single "insert-moulding" operation. In the embodiment shown in Figure 3a, the lattice(s) 8 are moulded separately, sandwiched together with the plate 2, placed in a mould and encircled by the plastics material forming the frame 6 injected thereabout. The plastics material of the frame bonds to the plastics material of the lattices to hold the assembly together. In the alternatives shown in Figures 3b and 3c, one or both of the lattices 8 is/are moulded separately and then bonded to a face of the frame 6.

Following coating of the septum plate 2 and the mounting thereof in the frame/lattices, a lead-containing active material 24 having a first polarity and a lead-containing active material 26 having a second polarity are respectively spread into the pockets 10 of the lattices 8, and pressed into the coating 16 so as to impregnate the pores 22 thereof sufficiently to anchor the lead-containing active material to the coating 16 throughout the life of the battery. Preferably, both faces of the septum plate 2 are coated with the lead particles, and both the positive and the negative active materials pressed into the respective interstices thereof. Otherwise, only the positive active material is pressed into the pores 22 of a coating 16 formed on one side of the septum plate 2. The lattice 8 may be either flush-pasted or over-pasted (ie, the thickness of the paste is greater than the thickness of the lattice wires 8a, 8b).

As best shown in Figure 6, the same framed electrode as discussed above may be used as a monopolar electrode (ie, in the end cells of the battery) by pasting only one side thereof with active material paste 26. In the end cell, the pasted side 26 will confront an opposite polarity face of an adjacent bipolar electrode, whilst unpasted face 27 will confront an end wall of the battery. At one end of the battery, the active material paste on the monopolar electrode will comprise positive active material, and at the other end of the battery, the active material paste on the monopolar electrode will comprise negative active material. Alternatively conventional pasted grid-type monopolar electrodes mounted in an appropriate frame may be used in the end cells.

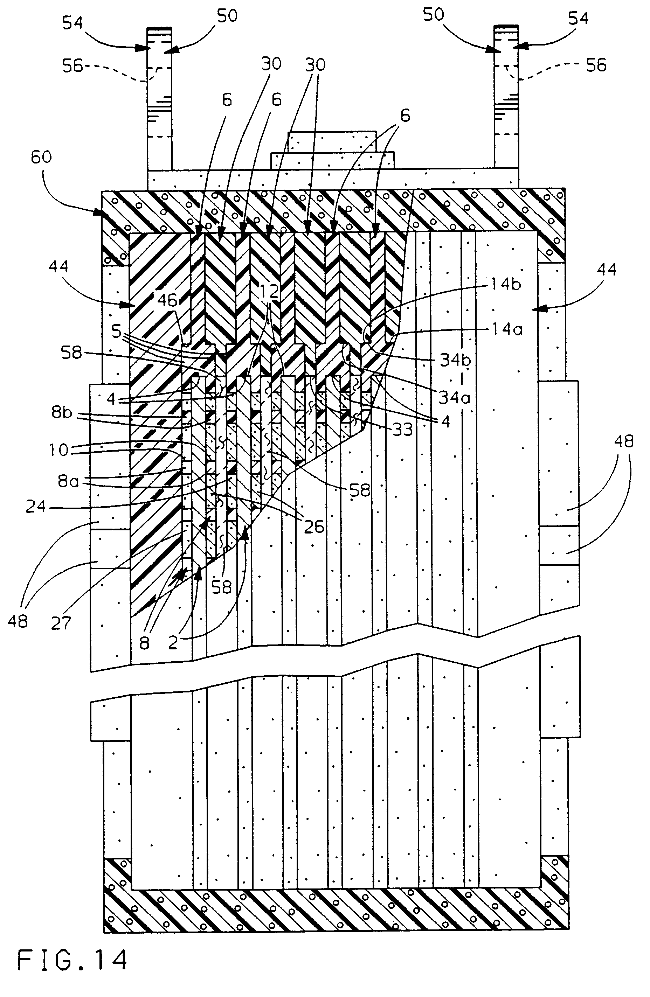

Figures 7 and 8 depict a spacer frame 30 which, in the finished battery, serves to space one bipolar electrode from the next adjacent electrode (ie, bipolar or monopolar) in the battery, and to define a region 32 between opposing faces of the adjacent electrodes for containing electrolyte of the battery and an interplate separator (eg, a compressed gas-recombinant type glass mat 58 (see Figure 14) such as that described in US-A-3,862,861). For convenience of handling and assembly, it is desirable to mould the edges of the separator (eg, glass mat 58) directly into the frame 30 (not shown). The spacer frame 30 contains annular recesses 34a and 34b along an inner rim 33 thereof sized to receive, in nesting fashion, the shoulders 14a and 14b defining the mesa-like lattices 8 for interlocking pairs of frames 6 securely together. An upper side 36 of the spacer frame 30 includes openings 38 and 40 therein for admitting electrolyte into the region 32 and/or for appropriately venting the battery as may be required after the cell stack of the battery has been assembled.

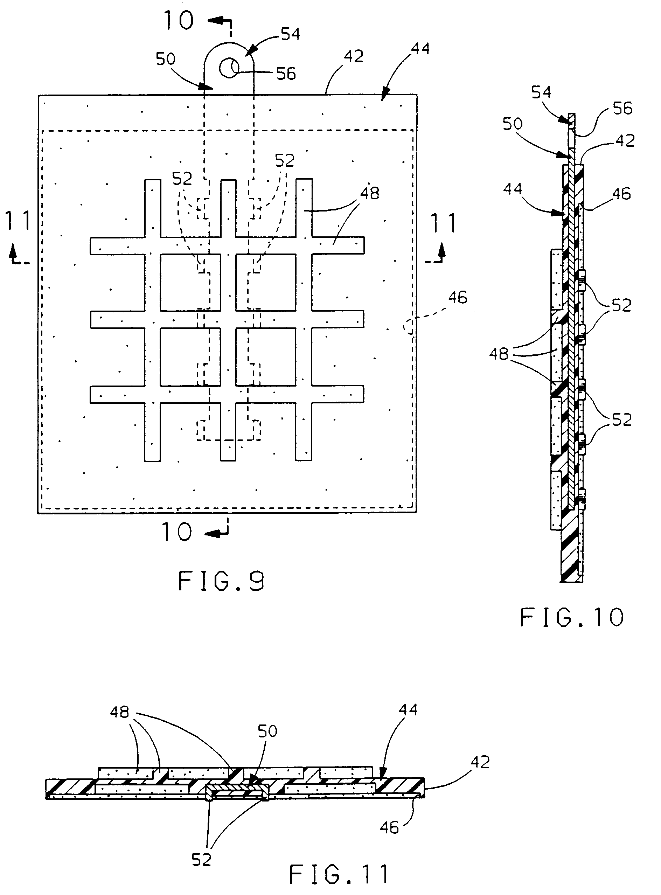

Figures 9-11 depict an end wall 44 of a bipolar electrode stack of a battery. The wall 44 comprises a non-conductive (eg, polyolefin) material having a recess 46 therein adapted to receive a shoulder 14a or 14b of one of the monopolar electrodes discussed above (see Figure 6). A plurality of criss-crossing ribs 48 on the outside of the wall 44, opposite the recess 46, stiffens the end wall 44 and prevents bulging thereof under pressure. A metal blade 50 having a plurality of tangs 52 projecting outwardly therefrom, and inwardly of the battery, is insert-moulded into the wall 44 and extends beyond a peripheral edge 42 thereof to form a terminal 54 for the battery. The terminal 54 has an appropriate aperture 56 therein adapted to receive a bolt, or the like, for connecting to an external electrical circuit. The tangs 52 projecting from the blade 50 extend into contact with the unpasted face of the lead septum plate 2 and are induction-welded thereto after the stack has been assembled. The blade 50 will preferably comprise tin-coated or Pb/Sn-coated copper wherein the Sn or Pb/Sn coating promotes bonding of the blade 50 to the plastics material forming the wall 44, and welding of the blade 50 to the septum plate 2 during induction-welding.

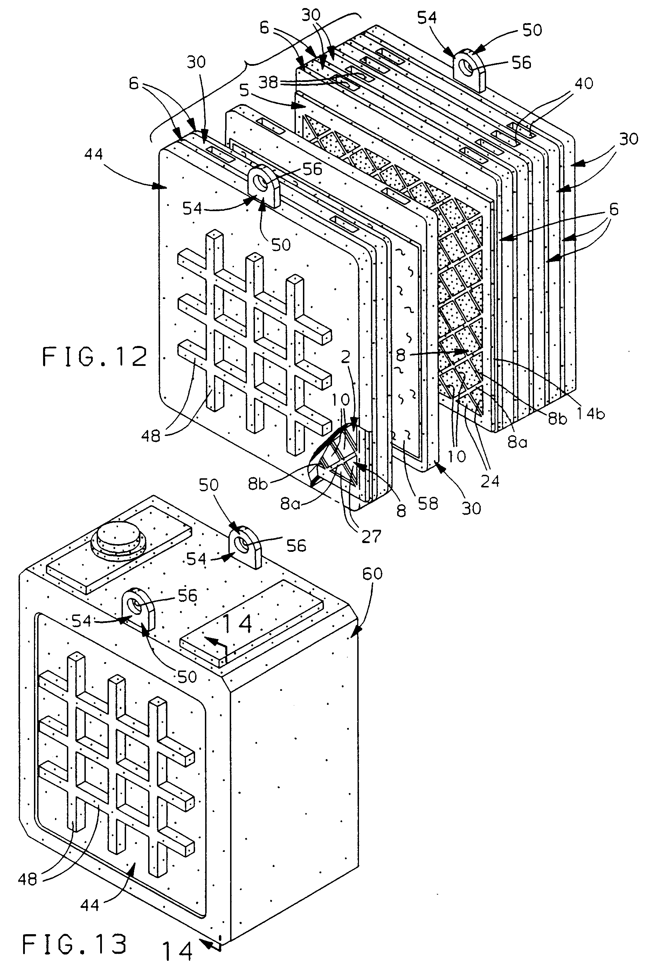

The spacer frames of the battery may be sealingly bonded one to the other to form a housing for the battery. However, Figures 12-14 shows a preferred embodiment of a bipolar electrode stack of a battery before and after encasement thereof in a separate housing. Figure 12 shows how the end walls 44 and the electrode and spacer frames nest one within the other to form a bipolar electrode stack. Figure 12 also shows the microporous glass mat separator 58 positioned within the spacer frame 30 prior to assembly of the stack. In accordance with a preferred embodiment, the assembled stack is held together in an appropriate mould and molten plastics material (eg, polypropylene, polyethylene) injected thereabout to form an outer housing 60 which embeds the frames and holds them all together as described in more detail in our co-pending patent application no US patent application Serial No 08/079033 (see Figures 13 and 14). The injected plastics material will preferably contain about 20% by weight of a foaming agent (eg, F-CL Foaming Agent sold by Wilson Fiberfill International, USA) and is injected under low pressure about the stack. At temperatures in excess of 177°C (350°F) the foaming agent produces CO, CO₂ and ammoniacal foaming gases which expand and foam the plastics material to fill the mould cavity without subjecting the stack to high moulding pressures used during injection-moulding. The resulting housing will have a porosity of about 20% by volume.

While the invention has been disclosed primarily in terms of specific embodiments thereof. the scope of the present invention is not intended to be limited thereto, but rather only to the extent set forth hereafter in the scope of the claims which follow.

The disclosures in United States patent application no 079,030, from which this application claims priority, and in the abstract accompanying this application are incorporated herein by reference.

## Claims

1. A bi-polar electrode for a lead-acid storage battery comprising: an electrolyte-impervious, lead septum plate (2) having a first face and a second face; a first lead-containing active material (24) overlaying and adhering to said first face; and a second lead-containing active material (26) overlaying and adhering to said second face, characterised in that the bi-polar electrode includes a porous coating (16) comprising multiple layers of lead particles (20) fused to each other and to at least one face (18) of said septum plate (2) so as to define a plurality of interconnecting, interstitial pores (22) therebetween; and the respective lead-containing active material overlaying said one face (18) overlays said coating (16) and impregnates at least a portion of said pores (22).

2. A bi-polar electrode according to claim 1, in which said first lead-containing active material comprises PbO₂ and said second lead-containing active material comprises Pb.

3. A bi-polar electrode according to claim 1 or 2, in which said coating (16) covers both of said first and second faces (24,26).

4. A bi-polar electrode according to claim 1, 2 or 3, in which said lead particles (20) are solidified droplets of molten lead sprayed onto said septum plate (2).

5. A bi-polar electrode according to claim 4, in which said molten lead is arc-sprayed onto said septum plate (2).

6. A bi-polar electrode according to claim 5, in which said coating has a thickness of about 0.051 mm (0.002 inches) to about 0.51 mm (0.02 inches).

7. A bi-polar electrode according to claim 5 or 6, in which said particles (20) vary in size from about 10 micrometres to about 200 micrometres.

8. A bi-polar electrode according to claim 7, in which the average size of said particles (20) is about 50 micrometres.

9. A bi-polar battery comprising: a stack of bi-polar electrodes, each one comprising a bi-polar electrode according to claim 1; a monopolar electrode at each end of said stack; a non-conductive frame (6) engaging the periphery of each of said bi-polar electrodes; non-conductive lattices (8a,8b) engaging said frame (6) of each of said bi-polar electrodes and overlaying the faces of said septum plate (2) so as to define a plurality of pockets (10); said lead-containing active materials (24,26) filling said pockets (10) and impregnating at least a portion of said pores (22) contained therein; spacing means (30) spacing said electrodes from each other in said stack and defining an electrolyte-retention region (32) between adjacent electrodes; and terminal means (54) engaging said monopolar electrodes for electrically connecting said battery to external electrical circuitry.

10. A bi-polar battery according to claim 9, in which at least one of said monopolar electrodes comprises a lead plate (2) having a porous coating (16) on a face thereof confronting one of said bi-polar electrodes in said stack, said coating (16) comprising multiple layers of lead particles (20) fused to each other and to said face so as to define a plurality of interconnecting, interstitial pores (22) therebetween, and a non-conductive lattice (8) engaging a non-conductive frame (6) and overlaying said face of said plate (2) so as to define a plurality of pockets (10) thereon.

11. A method of making an electrode for a Pb-acid storage battery characterised in that the method comprises the steps of: spraying a plurality of molten lead droplets onto at least one face (18) of a lead plate (2) so that, upon solidification, said droplets form an adherent porous coating (16) comprising multiple layers of lead particles (20) fused to each other and to said face (18) so as to define a plurality of interconnecting, interstitial pores (22) between said particles (20); and then pressing a lead-containing active material (24,26) into said pores (22).

12. A method or making an electrode according to claim 11, in which said electrode is a bi-polar electrode, said plate is a septum plate (2) separating opposite-polarity active materials one from the other, which septum plate (2) is coated with said particles (20) on opposite faces thereof, and said lead-containing active material (24,26) is pressed into said pores (22) on both faces of said septum plate (2).

13. A method of making an electrode according to claim 11, in which the coating (16) is about 0.051 mm (0.002 inches) to about 0.51 mm (0.02 inches) thick and comprises particles (20) ranging in size from about 10 micrometres to about 200 micrometres in diameter.

14. A method of making an electrode according to claim 13, in which said particles (20) have an average diameter of about 50 micrometres.

15. A method of making an electrode according to claim 11, in which said molten lead is formed by striking an electric arc between a lead electrode and a counter-electrode and said droplets are formed by flowing a stream of inert gas through said arc at such a sufficient rate as to disperse the molten lead into droplets and to propel them against said face (18).
